# EUROPÄISCHE PATENTSCHRIFT

(11) **EP 3 504 448 B1**
(45) Veröffentlichungstag und Bekanntmachung des Hinweises auf die Patenterteilung: **19.01.2022**
(21) Anmeldenummer: 17757741.8
(22) Anmeldetag: 22.08.2017
(51) Int. Cl.: F16B 7/18, F16B 7/20

(54) **VERBINDUNGSELEMENT ZUM HERSTELLEN EINER VERBINDUNG ZWISCHEN EINEM HOHLPROFIL UND EINEM WEITEREN BAUTEIL**
CONNECTING ELEMENT FOR PRODUCING A CONNECTION BETWEEN A HOLLOW PROFILED ELEMENT AND A FURTHER COMPONENT
ÉLÉMENT D'ASSEMBLAGE PERMETTANT LA RÉALISATION D'UN ASSEMBLAGE ENTRE UN PROFILÉ CREUX ET UN AUTRE ÉLÉMENT

(30) Priorität: 24.08.2016 DE 102016115717
(43) Veröffentlichungstag der Anmeldung: 03.07.2019
(73) Patentinhaber: Linde + Wiemann SE&Co. KG, Dillenburg 35683 (DE)
(72) Erfinder: SCHMIDT, Werner, 63755 Alzenau (DE); GEORG, Marcel, 57078 Siegen (DE); SOLBACH, Michael, 57439 Attendorn (DE)
(74) Vertreter: Müller, Eckhard
(86) Internationale Anmeldenummer: PCT/EP2017/071125
(87) Internationale Veröffentlichungsnummer: WO 2018/037004

(56) Entgegenhaltungen:
- WO-A1-2013/055292
- DE-U1-202013 105 256
- JP-U- H02 122 875

## Beschreibung

Die Erfindung betrifft ein Verbindungselement zum Herstellen einer Verbindung zwischen einem Hohlprofil und einem weiteren Bauteil, wobei das Verbindungselement einerseits für einen wenigstens formschlüssigen Eingriff mit dem Hohlprofil und für ein Verbinden mit dem weiteren Bauteil ausgebildet ist. Ferner betrifft die vorliegende Erfindung ein Hohlprofil mit wenigstens einem Verbindungsausschnitt sowie eine Hohlprofilverbindung.

Bei der Montage von Hohlprofilbauteilen, insbesondere rollprofilierten Hohlprofilbauteilen, ist in der Regel darauf zu achten, dass die geometrische Anordnung der Profilwandungen aufgrund der bei einer Montage auftretenden Haltekräfte verändert wird. Insbesondere sollen die die Stabilität verleihenden Wandungen des Hohlprofils nicht unzulässig zueinander verschoben werden, da dies die mechanische Stabilität des Hohlprofils negativ beeinflussen könnte. Im Kraftfahrzeugbau werden derartige Hohlprofile zum Aufbau von Kraftfahrzeugkomponenten verwendet, beispielsweise zur Konstruktion von Batteriekästen in Elektrofahrzeugen. Dabei unterliegen die aus den Hohlprofilen erstellten Batteriekästen hohen Anforderungen hinsichtlich der mechanischen Stabilität und der Widerstandsfähigkeit gegenüber Crash-Bedingungen. Gleichzeitig müssen eine dauerhafte und zuverlässige Verbindung mit einem weiteren Bauteil, beispielsweise mit einem Kraftfahrzeugschweller gewährleistet sein.

Um eine möglichst gleichmäßige Einleitung der Haltekräfte in das Hohlprofil zu gewährleisten, werden oftmals stabile Einsätze in das Hohlprofilbauteil eingesetzt, auch um Befestigungsmittel wie Schrauben an dem Hohlprofil sicher verankern zu können.

Aus der EP 0 841 240 A2 ist ein Hohlprofil bekannt, in welches eine Buchse für eine Verschraubung in eine Öffnung des Profils eingefügt wird, wobei die Buchse einerseits in eine Trennwand des Profils gepresst und andererseits mit einer äußeren Begrenzungswand des Hohlprofils verschweißt wird. Zum einen erfordert eine solche Ausgestaltung zwei separate Fügeschritte zum Befestigen der Buchse an dem Hohlprofil. Zum anderen erfordert ein Einpressen der Buchse in die Trennwand des Hohlprofils eine eng tolerierte Passung zwischen der Außenfläche der Buchse und der dazu korrespondierenden Öffnung, wodurch die Herstellung der Hohlprofilverbindung teurer wird. Zudem kann durch das Einpressen eine unerwünschte Verformung der Trennwand des Hohlprofils auftreten.

Aus der GB 2 109 433 A ist eine Buchse für eine Profilverschraubung bekannt, welche in der Art eines Dübels in ein Durchgangsloch des Hohlprofils eingeführt und dann von einem Schraubbolzen derart aufgeweitet wird, dass die Buchse formschlüssig innerhalb des Hohlprofils eingeschlossen ist.

Aus der US 5,567,005 A ist eine Befestigungshülse bekannt, die als Verbindungsmittel für Verschraubungen mit einem Fahrzeugrahmen verwendet wird, und die an mehreren Stellen mit dem Fahrzeugrahmen verschweißt werden muss.

Aus der DE 43 41 206 A1 ist ein Hohlprofil mit einem Verbindungselement bekannt, welches unter Ausbildung eines Wulstes innerhalb des Hohlprofils formschlüssig gehalten wird.

Aus der FR 2 689 945 A1 ist eine zweiteilige Verschraubungshülse zum Verbinden mehrerer Profilabschnitte bekannt.

Aus der DE 10 2013 008 913 A1 ist ein Mehrkammerprofil mit einem Einlegeteil zur Befestigung eines Anbauteils bekannt, wobei das Einlegeteil im Querschnitt etwa dem Profilquerschnitt des Mehrkammerprofils entspricht. Das Einlegeteil muss aufwendig durch eine offene Stirnseite des Profils in das Hohlprofil eingeführt und zur entsprechenden Verschraubungsstelle geschoben werden, bevor eine Verschraubung des Profils mit dem Anbauteil möglich wird.

Aus der WO 2015/022389 A1 ist ein Gehäuse zum Aufnehmen von Gegenständen bekannt, mit einer Schraubbefestigung, welche über ein Distanzstück verfügt, das zwischen zwei Blechen des Gehäuses angeordnet ist.

Aus der WO 2005/075281 A1 ist ein Verbindungsbereich zur Anbindung eines Anbauteils an einer Fahrzeugkarosserie bekannt, wobei ein Verbindungselement in das Hohlprofil eingesetzt und mittels Widerstands-Pressschweißens an ein Trägerbauteil der Fahrzeugkarosserie angebunden ist. In einem zweiten, separaten Befestigungsabschnitt, der beabstandet gegenüber dem ersten Befestigungsabschnitt angeordnet ist, ist das Verbindungselement mit einem Versteifungsblech der Fahrzeugkarosserie verbunden.

Aus der EP 1 380 495 A1 ist ein Karosseriehohlträger mit einem Gewindeeinlegerteil bekannt, welches in den Hohlprofilträger einsteckbar ist.

Aus der DE 103 06 180 A1 ist ein Kraftfahrzeugbauteil und ein Verfahren zu dessen Herstellung aus einem Blechprofil mit zumindest einem Gewindeanschluss bekannt.

Ferner sind aus dem Stand der Technik die DE 20 2013 105 256 U1, die WO 2015/022389 A1 sowie die DE 10 2015 000 490 A1 bekannt.

Die aus dem Stand der Technik bekannten Lösungen zur Anbindung eines Hohlprofilbauteils an ein weiteres Bauteil, insbesondere eine Fahrzeugkarosserie, haben sich bisher als zu kostenaufwendig und zu umständlich erwiesen.

Vor diesem Hintergrund liegt der Erfindung die Aufgabe zugrunde, ein Verbindungselement gemäß dem Oberbegriff des Anspruchs 1 und ein Hohlprofil gemäß Anspruch 10 anzugeben, welches auf vereinfachte Weise mit dem Hohlprofil bzw. mit einem Verbindungselement verbindbar ist, so dass gleichzeitig eine hohe Haltekraft auf das Hohlprofil übertragen werden kann.

Die Aufgabe wird durch ein Verbindungselement mit den Merkmalen des Anspruchs 1 gelöst. Das Verbindungselement zum Herstellen einer Verbindung zwischen einem Hohlprofil und einem weiteren Bauteil ist einerseits für einen wenigstens formschlüssigen Eingriff mit dem Hohlprofil und für ein Verbinden mit dem weiteren Bauteil ausgebildet und, dadurch gekennzeichnet, dass wenigstens zwei in der Höhe versetzt zueinander angeordnete Anlageflächen für einen Kontakt mit wenigstens zwei damit korrespondierenden Abschnitten des Hohlprofiles vorgesehen sind, wobei das Verbindungselement einen roationssymmetrischen Grundkörper aufweist und wenigstens ein das Hohlprofil in Verbindungsstellung umgreifendes Formschlussmittel zum Fixieren des Verbindungselementes an einem Abschnitt des Hohlprofils nach dem Bajonettprinzip vorgesehen ist. Durch eine solche Ausgestaltung vereinfacht sich die Montage gerade bei der Serienproduktion. Gleichzeitig ist die Übertragung der großen Haltekräfte gewährleistet.

Der Grundgedanke der Erfindung ist, das Verbindungselement auf einfache Weise in das Hohlprofilbauteil einsetzen und dabei dann hohe Haltekräfte mittels der Anlageflächen in das Hohlprofilbauteil einleiten zu können, wobei gleichzeitig die Geometrie des Hohlprofilbauteils nicht oder nur kaum gegenüber der vorgesehenen Profilgeometrie verändert wird. Die Anlageflächen sind dabei etwa gleichsinnig an dem Verbindungselement so angeordnet, dass es mit den beiden Anlageflächen an unterschiedlichen Abschnitten eines Hohlprofils zu liegen kommt und somit eine auf das Verbindungselement wirkende Haltekraft sowohl über die eine als auch über die andere Anlagefläche in das Hohlprofil eingeleitet wird. Beispielsweise kommen die Anlageflächen an sich gegenüberliegenden Wandungen eines Hohlprofils zur Anlage, wodurch die Krafteinleitung in das Hohlprofil über einen größeren Bereich erfolgt. Das Verbindungselement ist somit im Wesentlichen dazu ausgebildet, die Haltekraft über beide Anlageflächen in einer Richtung auf das Hohlprofil zu übertragen.

Nach einer bevorzugten Ausführungsform kann vorgesehen sein, dass die Anlageflächen in etwa parallel zueinander ausgebildeten Ebenen verlaufen. Auf diese Weise lassen sich die in das Hohlprofil einzuleitenden Haltekräfte besonders gut und gleichmäßig übertragen und gleichzeitig die Maßhaltigkeit der Profilgeometrie aufrechterhalten.

Zudem kann vorgesehen sein, dass das Verbindungselement ein das Hohlprofil in Verbindungstellung umgreifendes Formschlussmittel, insbesondere einen Rasthaken, zum Fixieren des Verbindungselementes an einem Abschnitt des Hohlprofils aufweist. Das oder die Formschlussmittel gestatten eine besonders einfach vorzunehmende Montage des Verbindungselementes an dem Hohlprofilbauteil, wobei das Verbindungselement bereits ohne einen zusätzlichen Fügeschritt sicher mit dem Hohlprofil verbunden wird. Die Formschlussmittel sind primär dazu vorgesehen, das Verbindungselement in dem Hohlprofil zu fixieren. Daher können die Formschlussmittel zum Übertragen deutlich kleinerer Kräfte im Vergleich zu den von den Anlageflächen des Verbindungselementes übertragenen Kräften ausgebildet sein.

Insbesondere kann die Anbringung des Verbindungselementes an dem Hohlprofil nach dem sogenannten "Bajonettprinzip" in der Weise erfolgen, dass das Verbindungselement in einen Verbindungsausschnitt des Hohlprofils etwa geradlinig eingeführt und dann durch einfaches Verdrehen des Verbindungselementes gegenüber dem Hohlprofilbauteil daran fixiert werden kann.

Ein derartiges Verbindungskonzept, welches auf simplen Relativbewegungen des Verbindungselementes und des Hohlprofils zueinander aufbaut, eignet sich insbesondere für die automatisierte Massenproduktion.

In einer besonderen Ausführungsform kann zudem vorgesehen sein, dass jeder Anlagefläche wenigstens ein Formschlussmittel für eine formschlüssige Verbindung mit dem entsprechenden Abschnitt des Hohlprofils zugeordnet ist. Auf diese Weise kann eine besonders sichere Verbindung zwischen dem Verbindungselement und dem Hohlprofilbauteil erreicht werden.

Vorzugsweise kann vorgesehen sein, dass das wenigstens eine Formschlussmittel an einer der jeweiligen Anlagefläche abgewandten Seite Einführhilfen, insbesondere Einführschrägen, aufweist. Dies hat den besonderen Vorteil, dass eine maschinelle oder Blindmontage schneller und einfacher erfolgen kann.

In einer bevorzugten Ausführungsform kann das Verbindungselement ferner an wenigstens einer der Anlageflächen wenigstens ein Rastmittel zum Sichern der Verbindung mit dem Hohlprofil aufweisen, insbesondere wenigstens eine Rastnase. Insbesondere bei der Verwendung des Hohlprofilbauteils in stark durch Vibrationen belasteten Anwendungen, wie etwa an einer Kraftfahrzeugkarosserie, kann damit erfolgreich einem unerwünschten, selbsttätigen Lösen begegnet werden.

Nach einem bevorzugten Ausführungsbeispiel kann zudem vorgesehen sein, dass auf wenigstens einer der Anlageflächen Dichtmittel für eine dichtende Anlage an einem Abschnitt des Hohlprofils vorgesehen sind, wobei die Dichtmittel vorzugsweise auf einer umlaufenden Dichtspur angeordnet sind. Auf diese Weise kann das Hohlprofil bzw. die zusammen mit dem Verbindungselement aufgebaute Hohlprofilverbindung auf einfache Weise und in einem Arbeitsschritt gegen das Eindringen von Fremdkörpern oder das Eindringen von Feuchtigkeit abgedichtet werden. Gerade bei der Verwendung von Hohlprofilbauteilen im Kraftfahrzeugbau, insbesondere in einer Anwendung des Rohrprofilbauteils als Rahmen eines Batteriekastens, ist eine Abdichtung gegenüber Feuchtigkeitseintritt von besonderer Bedeutung.

Ferner kann in einer bevorzugten Ausführungsform vorgesehen sein, dass Mittel zum Ansetzen eines Werkzeugs, insbesondere eine Schlüsselfläche an dem Verbindungselement vorgesehen sind. Das Vorsehen von Mitteln zum Ansetzen eines Werkzeuges erlaubt eine besondere Vereinfachung des Montageprozesses, da eine Relativbewegung für die Herstellung einer Verbindung zwischen dem Verbindungselement und dem Hohlprofil so auf einfache Weise übertragen werden kann.

Insbesondere kann vorgesehen sein, dass die Mittel zum Ansetzen des Werkzeugs an einem die Anlageflächen verbindenden Abschnitt des Verbindungselementes, insbesondere an einem Mantelabschnitt vorgesehen sind. Dieser Abschnitt, insbesondere der Mantelabschnitt, der in erster Linie zur Beabstandung der Anlageflächen an dem Verbindungselement vorgesehen ist, kann auf diese Weise für eine weitere Nutzung vorgesehen werden, so dass trotz erweiterter Funktionalität das Verbindungselement nicht oder nicht wesentlich größer baut oder anspruchsvoller herzustellen ist.

Die Aufgabe wird ferner gelöst durch ein Hohlprofil gemäß Anspruch 11, welches wenigstens einen Verbindungsausschnitt aufweist, der wenigstens zwei einander gegenüberliegende Wandabschnitte des Hohlprofils mit jeweils wenigstens einer Ausnehmung zum Aufnehmen eines Verbindungselemente durchsetzt, wobei die Ausnehmungen unterschiedlich groß sind, insbesondere unterschiedliche Durchmesser aufweisen, und der dadurch gekennzeichnet ist, das zum Herstellen einer Verbindung zwischen dem Hohlprofil und einem Verbindungselement wenigstens eine Ausnehmung des Hohlprofils wenigstens eine radiale Aufweitung zum Hindurchführen wenigstens eines Formschlussmittels des Verbindungselementes aufweist.

Eine derartige Ausgestaltung des Hohlprofils erlaubt eine besonders einfache Anbindung eines Verbindungselementes an das Hohlprofil bei gleichzeitiger großflächiger Übertragung von Haltekräften zum Anbringen des Hohlprofils an ein weiteres Bauteil.

Die Aufgabe wird außerdem gelöst durch eine Hohlprofilverbindung gemäß Anspruch 12, welche wenigstens ein erfindungsgemäßes Verbindungselement und ein Hohlprofil, insbesondere das erfindungsgemäße Hohlprofil, aufweist.

Insbesondere kann dabei vorgesehen sein, dass das Verbindungselement im montierten Zustand mit dessen Anlageflächen an dazu korrespondierenden Abschnitten des Hohlprofils anliegt, wobei Formschlussmittel des Verbindungselementes wenigstens einen der Abschnitte umgreifen, so dass ein Teil des Abschnittes zwischen dem Formschlussmittel und der Anlagefläche zu liegen kommt.

Auf diese Weise kann das Verbindungselement besonders einfach an dem Hohlprofil fixiert werden und gleichzeitig die erforderlichen Haltekräfte auf das Hohlprofil übertragen. Das Verbindungselement selbst kann an ein weiteres Bauteil angebracht werden, insbesondere geschraubt werden.

In einer bevorzugten Ausführungsform kann vorgesehen sein, dass das Verbindungselement im montierten Zustand zusätzlich gegen ein Verdrehen in der Ebene in einer der Anlageflächen gesichert ist, vorzugsweise form- und/oder reibschlüssig, insbesondere form- und/oder reibschlüssig und stoffschlüssig.

Bei besonders hoch beanspruchten Anwendungen der Hohlprofilverbindung kann eine zusätzliche Sicherung gegen selbsttätiges Verdrehen in der Ebene wenigstens einer der Anlagenflächen die Qualität der Hohlprofilverbindung verbessern.

Um eine dauerhaft verliersichere Verbindung zwischen dem Verbindungselement und dem Hohlprofil zu erreichen, kann zusätzlich zu einem form- und/oder reibschlüssigen Widerstand eine stoffschlüssige Verbindung zwischen dem Hohlprofil und dem Verbindungselement wenigstens abschnittsweise ergänzt werden. Bevorzugt wird diese stoffschlüssige Verbindung durch Schweißen erreicht. Löten oder Kleben des Verbindungselementes an das Hohlprofilbauteil liegen aber ebenso im Bereich der Erfindung.

### Darstellung der Erfindung

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen:
- Figur 1: eine schematische Perspektivansicht eines erfindungsgemäßen Verbindungselementes,
- Figur 2: eine schematische Schnittansicht des erfindungsgemäßen Verbindungselementes,
- Figur 3: eine Unteransicht eines erfindungsgemäßen Verbindungselementes,
- Figur 4: eine schematische, seitliche Schnittansicht eines Hohlprofilbauteils mit eingesetztem Verbindungselement,
- Figur 5: eine schematische Perspektivansicht eines Hohlprofils,
- Figur 6: eine Perspektivansicht eines Hohlprofils mit mehreren Verbindungselementen,
- Figur 7: eine schematische Perspektivansicht auf ein Hohlprofil mit Verbindungselementen,
- Figur 8: eine schematische Schnittansicht eines Hohlprofils mit eingesetztem Verbindungselement während der Montage,
- Figur 9: eine Ansicht gemäß Figur 8, jedoch nach erfolgter Montage des Verbindungselementes und
- Figur 10: eine Hohlprofilverbindung in Montagestellung an einem weiteren Bauteil.

Gleiche oder gleichwirkende Bauteile werden in den nachfolgend dargestellten Figuren anhand mehrerer Ausführungsformen mit gleichen Bezugszeichen versehen, um die Lesbarkeit zu verbessern.

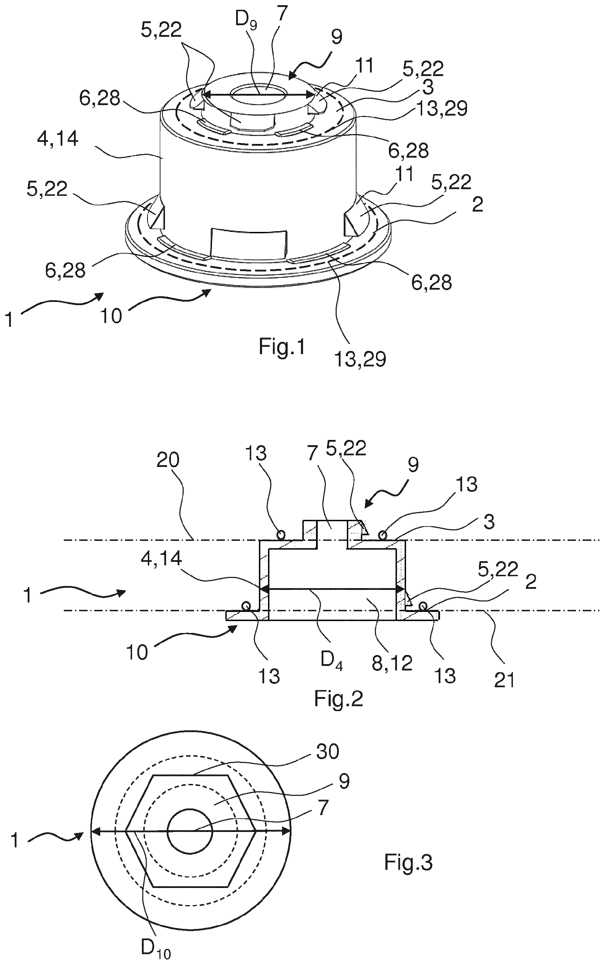

Ein erfindungsgemäßes Verbindungselement 1 ist in den Figuren 1 bis 3 dargestellt. Figur 1 zeigt eine Perspektivansicht des Verbindungselementes 1, welches im vorliegenden Ausführungsbeispiel als eine sogenannte Schraubbuchse oder Schraubhülse ausgeführt ist. Das Verbindungselement 1 weist dabei grundsätzlich einen im wesentlichen rotationssymmetrischen Grundkörper auf, welcher einen etwa zylindrischen Kopfabschnitt 9 aufweist, der über einen zumindest an der Außenseite zylindrisch geformten Abschnitt 4 mit einem ringförmigen Bund 10 verbunden ist. Der Abschnitt 4 des Verbindungselementes 1 ist in seinem Durchmesser D₄ gegenüber dem Durchmesser D₁₀ des ringförmigen Bundes 10 unter Ausbildung einer ersten Anlagefläche 2 zurückgesetzt.

Für die Zwecke der Beschreibung der Erfindung werden die folgenden Definitionen von Richtungen zugrundegelegt: Die Richtung "nach oben" ist die Richtung, in die sich der Kopfabschnitt 9 von dem Abschnitt 4 weg erstreckt. Die Richtung "nach unten" ist die Richtung, in die sich der ringförmige Bund 10 von dem Abschnitt 4 weg erstreckt. Die Umfangsrichtung ist die Richtung, in die sich beispielsweise die Mantelfläche des Abschnitts 4 erstreckt.

Der Kopfabschnitt 9 des Verbindungselementes 1 ist in dessen Durchmesser D₉ gegenüber dem Durchmesser D₄ des Abschnitts 4 unter Ausbildung einer zweiten Anlagefläche 3 zurückgesetzt.

Die Anlageflächen 2 und 3 weisen damit in die gleiche Richtung, im vorliegenden Fall nach oben und sind in ihrer Höhe versetzt zueinander angeordnet. Dabei ist es möglich, dass sich die beiden Anlageflächen 2 und 3 in etwa parallel zueinander verlaufenden Ebenen 20, 21 erstrecken. "Etwa parallel" hat die Bedeutung, dass die Ebenen innerhalb der ihnen zugeordneten Form- und Lagetoleranzen als parallel zueinander ausgebildet anzusehen sind. Es sind jedoch auch Ausführungsformen denkbar, bei denen die Ebenen 20, 21, in denen die Anlageflächen 2, 3 verlaufen, nicht parallel zueinander sind.

Jeweils an dem Kopfabschnitt 9 und an dem Abschnitt 4 des Verbindungselementes 1 sind Formschlussmittel 5 in Form von Rasthaken 22 ausgebildet, die radial von dem Kopfabschnitt 9 bzw. von dem Abschnitt 4 abstehen und gleichzeitig in der Richtung nach oben zu der jeweiligen Anlagefläche 2, 3 beabstandet sind. In dem vorliegenden Ausführungsbeispiel sind jeweils am Kopfabschnitt 9 und am Abschnitt 4 drei Formschlussmittel 5 erkennbar, wobei ein viertes Formschlussmittel 5 auf der Rückseite des Verbindungselementes 1, in der Ansicht verdeckt, vorgesehen ist. Es ist jedoch auch möglich, dass mehr oder weniger Formschlussmittel 5 vorgesehen werden. Zum Fixieren des Verbindungselementes 1 ist wenigstens ein Formschlussmittel 5 erforderlich, welches entweder an dem Abschnitt 4 oder an dem Kopfabschnitt 9 angeordnet ist. Bei dem Vorsehen mehrerer Formschlussmittel 5 kann bevorzugt eine über dem Umfang gleichmäßig verteilte Anordnung der Formschlussmittel 5 vorgesehen werden.

Auf der jeweiligen Anlagefläche 2, 3 können zusätzlich Rastmittel 6 vorgesehen werden. Im vorliegenden Ausführungsbeispiel sind diese Rastmittel 6 als Rastnasen 28 ausgebildet. Die Rastmittel 6 sind bevorzugt in Umfangsrichtung versetzt zu den Formschlussmitteln 5 angeordnet.

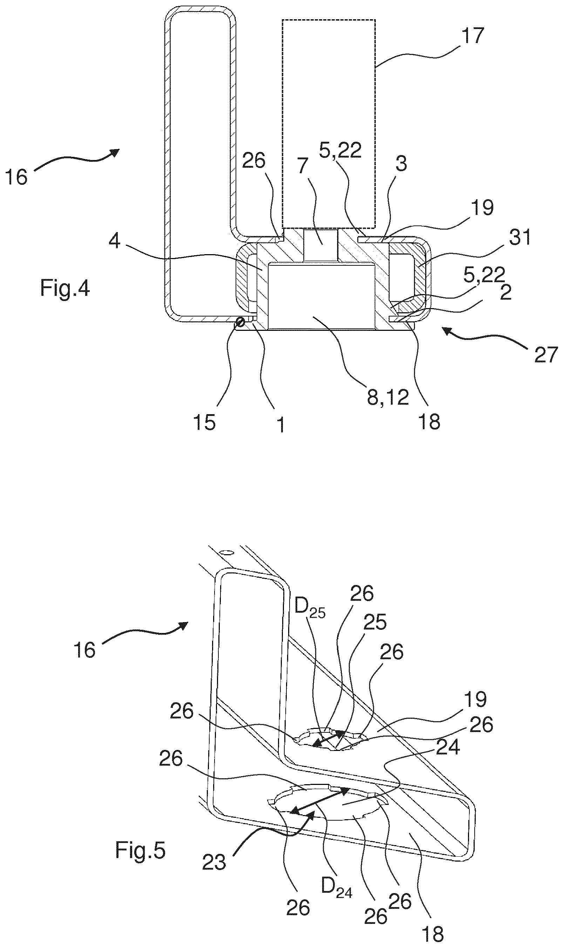

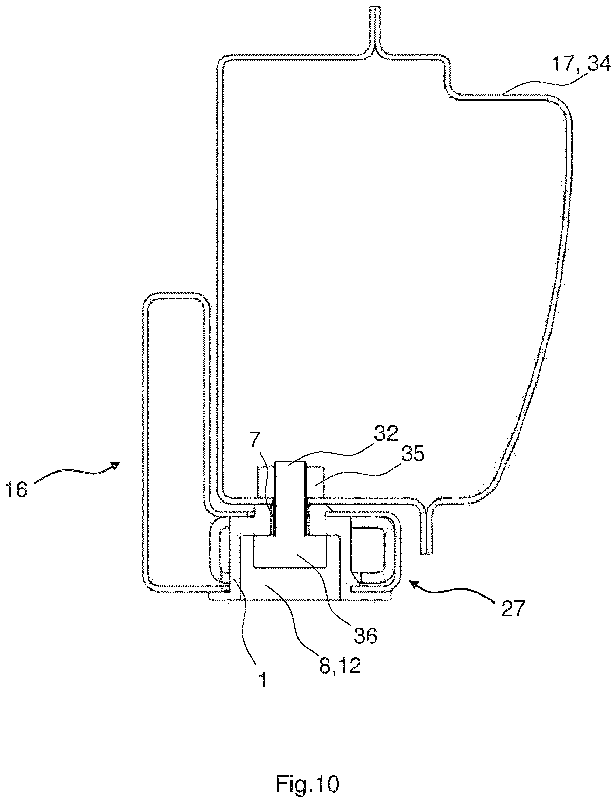

Das Verbindungselement 1 ist im Kopfabschnitt 9 zum Verbinden mit einem weiteren Bauteil 17 ausgebildet. Das weitere Bauteil 17 ist beispielsweise in den Figuren 4 und 10 dargestellt und kann ein Fahrzeugschweller 34 sein. In der vorliegenden Ausführungsform erfolgt die Ausbildung des Kopfabschnitts 9 zum Verbinden mit einem weiteren Bauteil 17 durch das Vorsehen eines Schraubloches 7, welches bevorzugt konzentrisch mit dem Kopfabschnitt 9 bzw. mit dem Abschnitt 4 und dem Bund 10 angeordnet ist.

Bei der - abgesehen von den Formschlussmitteln 5 und den Rastmitteln 6 - konzentrisch ausgestalteten Form des Verbindungselementes 1 bildet der Abschnitt 4 zumindest an der Außenseite einen Mantelabschnitt 14, welcher einen in der Figur 2 gezeigten Aufnahmeraum 8 für ein Befestigungsmittel, beispielsweise eine in der Figur 10 gezeigte Schraube 32, umschließt.

Der Aufnahmeraum 8 für das Befestigungsmittel kann abweichend von der rotationssymmetrischen Mantelfläche des Mantelabschnitts 14 innenseitig auch nicht rotationssymmetrisch geformt sein, um gleichzeitig ein Mittel 12 zum Ansetzen eines Werkzeugs zu bilden. Die Mittel 12 können somit auch als Werkzeugangriffsmittel bezeichnet werden. In der vorliegenden Ausführungsform sind diese Mittel 12 als Schlüsselfläche 30 ausgebildet, die beispielsweise Teil einer Innensechskantform bilden, wie dies in der Figur 3 dargestellt ist. Der Mantelabschnitt 14 weist somit eine zylindrische Mantelfläche und eine im Querschnitt sechseckig geformte Innenfläche auf.

Auf den die Oberseiten des Bundes 10 sowie des Abschnitts 4 bildenden Anlageflächen 2, 3 kann ferner ein Dichtmittel 13 angeordnet oder darin eingelassen sein, welches als in Umfangsrichtung umlaufende Dichtspur 29 ausgeführt sein kann. Dabei ist es denkbar, dass ein gleichzeitig als Klebstoff wirkendes Dichtmittel 13 die an den Anlageflächen 2, 3 vorgesehenen Rastmittel 6 ergänzt oder ersetzt. Dies gilt auch, wenn das Dichtmittel nicht klebend, aber kompressibel ausgeführt wird. Ferner können Dichtmittel 13 auch auf nur einer der Anlageflächen 2, 3 vorgesehen werden.

In den Figuren 4 bis 10 ist ein Hohlprofil 16 dargestellt, in welches ein Verbindungselement 1 einsetzbar oder eingesetzt ist.

Das Verbindungselement 1 wird im montierten Zustand formschlüssig in dem Hohlprofil 16 gehalten. Dies wird dadurch erreicht, dass die als Rasthaken 22 ausgebildeten Formschlussmittel 5 Abschnitte 18, 19, des Hohlprofils 16 umgreifen, an denen wiederum die jeweiligen Anlageflächen 2, 3 des Verbindungselementes 1 anliegen.

In das Hohlprofil 16 ist zur Aufnahme des Verbindungselementes 1 ein Verbindungsausschnitt 23 eingebracht, welcher sich mit seinen Ausnehmungen 24, 25 unten und oben in dem Hohlprofil 16 erstreckt und dabei den oberen Abschnitt 19 des Hohlprofils 16 und den unteren Abschnitt 18 des Hohlprofils 16 durchsetzt. Dabei ist die dadurch geformte Ausnehmung 24 an dem unteren Abschnitt 18 des Hohlprofils 16 in ihrem Durchmesser D₂₄ wenigstens so groß ausgestaltet, dass ein Hindurchführen des Mantelabschnitts 14 des Verbindungselementes 1, abgesehen von den daran angeformten Formschlussmitteln 5, möglich ist. Die zweite Ausnehmung 25 an dem oberen Abschnitt 19 des Hohlprofils 16 ist in ihrem Durchmesser D₂₅ so ausgestaltet, dass der Kopfabschnitt 9, abgesehen von den daran ausgebildeten Formschlussmitteln 5, hindurchgeführt werden kann.

Zusätzlich sind an den Ausnehmungen 24, 25 radiale Aufweitungen 26 ausgebildet, welche mit den an dem Verbindungselement 1 angeordneten Formschlussmitteln 5 korrespondieren.

Das Verbindungselement 1 wird zur Montage durch die größere Ausnehmung 25 in einer Einführrichtung 33 in das Hohlprofil eingeführt, wobei die an dem Mantelabschnitt 14 vorgesehenen Formschlussmittel mit den dazu korrespondierenden radialen Aufweitungen 26 in Deckung gebracht werden. Beim Erreichen des oberen Abschnittes 19 des Hohlprofils 16 wird dann der Kopfabschnitt 9 durch die obere Ausnehmung 25 des Hohlprofils 16 hindurchgeführt, wobei hierzu auch die Formschlussmittel 5 mit den dazu korrespondierenden, radialen Aufweitungen 26 ausgerichtet sein müssen.

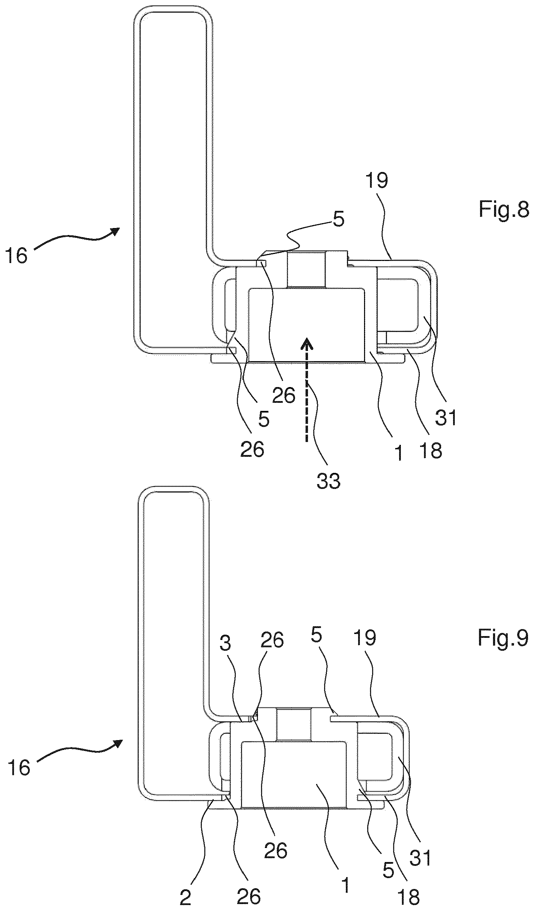

Der eingeführte Zustand des Verbindungselementes 1 in das Hohlprofil 16 ist in der Figur 8 dargestellt, in welcher die Formschlussmittel 5 sich in Deckung mit den radialen Aufweitungen 26 befinden. Zur Fixierung des Verbindungselementes 1 an dem Hohlprofil 16 wird dann das Verbindungselement 1 in Umfangsrichtung verdreht, so dass die Formschlussmittel 5 außer Deckung mit den jeweiligen radialen Aufweitungen 26 gelangen, um den entsprechenden Abschnitt 18, 19 des Hohlprofils 16 zu umgreifen, wie in Figur 9 dargestellt.

Zur Erleichterung des Einführvorgangs des Verbindungselementes 1 in das Hohlprofil 16 sind die Formschlussmittel 5 wenigstens teilweise mit einer Einführhilfe versehen, die beispielsweise durch Einführschrägen 11 gebildet sind, die sich auf der den Anlageflächen 2, 3 abgewandten Seite der Formschlussmittel 5 erstrecken. Eine Ausgestaltung sieht vor, die Einführschrägen beispielsweise nur an den Formschlussmitteln 5 vorzusehen, welche an dem Abschnitt 4 des Verbindungselementes angeordnet sind. Bereits eine durch diese Einführschrägen erzielte Zentrierung und Ausrichtung des Verbindungselementes 1 bezogen auf das Hohlprofil 16 kann ausreichen, den Kopfabschnitt 9 in der erforderlichen Stellung in die zweite Ausnehmung 25 einzuführen. Der umgekehrte Fall ist ebenso möglich, bei welchem nur die an dem Kopfabschnitt 9 ausgebildeten Formschlussmittel 5 über Einführhilfen in Form der Einführschrägen 11 verfügen.

Das in das Hohlprofil 16 eingesetzte Verbindungselement 1 kann gleichzeitig durch ein in das Hohlprofil eingesetzte Verstärkungselement 31 geführt sein und beispielsweise im Bereich des Mantelabschnittes 14 teilweise an einer Innenfläche des Verstärkungselementes 31 anliegen. Auf diese Weise kann das Verbindungselement 1 die zusätzliche Funktion erhalten, von dem Verstärkungselement 31 ausgehende, in Richtung des Mantelabschnitts 14 wirkende Kräfte aufzunehmen und über den seitlichen Eingriff des Kopfabschnittes 9 sowie des Mantelabschnittes 14 in das Hohlprofil 16 einzuleiten.

Dies trifft beispielsweise im Crash-Fall zu, bei welchem das Verstärkungselement 31 seitlich verformt verschoben werden kann.

Das vorliegende Verbindungselement 1 kann bevorzugt in Kraftfahrzeuganwendungen zum Einsatz kommen, in welchen Hohlprofilbauteile aus dem hier beschriebenen Hohlprofil 16 erstellt werden, und mit weiteren Bauteilen 17, beispielsweise mit einem Kraftfahrzeugrahmen, verschraubt werden können. Dabei wird das Hohlprofil 16 vorzugsweise in der Einführrichtung 33 gegen das weitere Bauteil 17 vorgespannt, wobei die Anlageflächen 2, 3 die dabei auftretenden Kräfte in das Hohlprofil entlang der Einführrichtung einleiten.

In derartigen Anwendungen kommt es regelmäßig zu großen Vibrationsbelastungen, die ein selbsttätiges Lösen der Verbindung zwischen dem Verbindungselement 1 und dem Hohlprofil 16 verursachen könnten. Die an dem Verbindungselement 1 vorgesehenen Rastmittel 6 wirken durch ihre Anlage an dem jeweiligen Abschnitt 18, 19 des Hohlprofils einem selbsttätigen, ungewollten Verdrehen des Verbindungselementes 1 bezogen auf das Hohlprofil 16 entgegen.

Zusätzlich kann eine Schweißverbindung 15 vorgesehen werden, die das Verbindungselement 1, wie in der Figur 4 dargestellt, gegen ein Verdrehen sichert. Anstelle der Schweißverbindung 15 und der Rastmittel 6 sind aber auch andere form- und/oder reibschlüssige beziehungsweise stoffschlüssige Sicherungsmaßnahmen gegen ein selbsttätiges Verdrehen des Verbindungselementes 1 denkbar. Beispielsweise kann das Verbindungselement zusätzlich verklebt oder an das Hohlprofil 16 gelötet werden. Denkbar ist auch, dass die Dichtmittel 13 gleichzeitig als reibschlüssiges Rastmittel 6 oder als Klebeverbindung wirken.

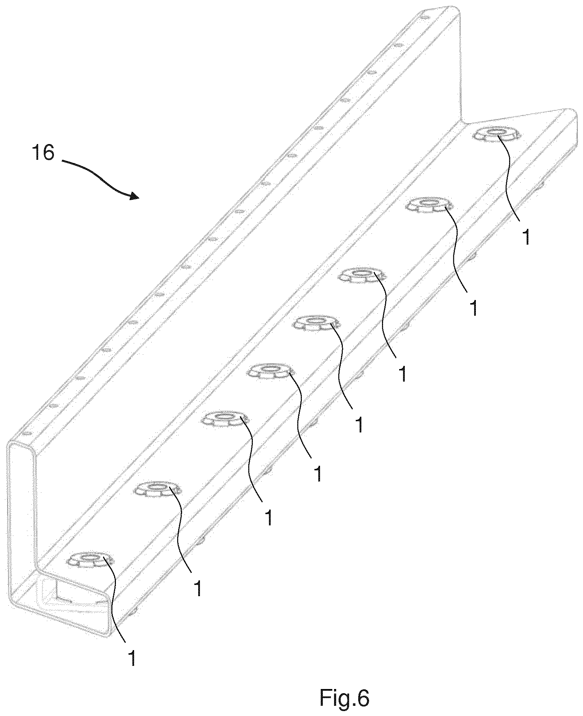

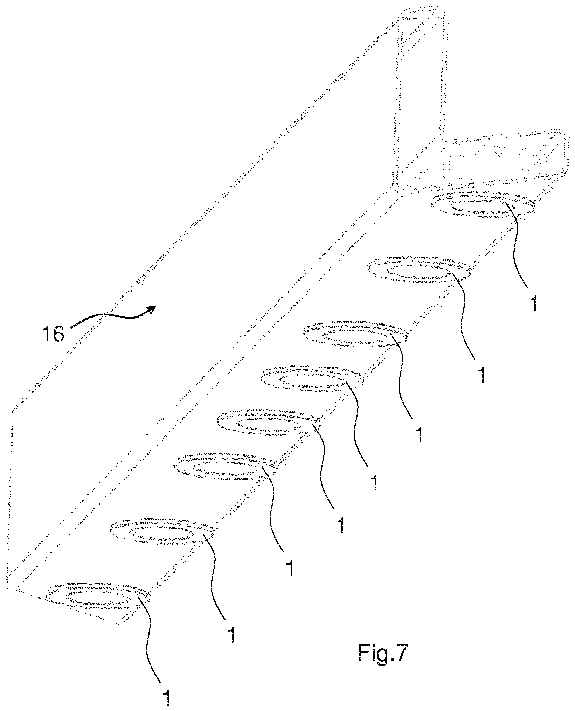

In den Figuren 6 und 7 ist ein vollständiges Hohlprofil 16 gezeigt, welches beispielsweise Teil eines Seitenrahmens eines Batteriekastens für ein Elektrofahrzeug bildet. Die in das Hohlprofil 16 eingesetzten Verbindungselemente 1 werden zur Verschraubung des Hohlprofils 16 mit dem Fahrzeugrahmen eines nicht dargestellten Elektrofahrzeugs verwendet. Dabei kommt insbesondere zum Tragen, dass ein Batteriekasten eines Elektrofahrzeugs als Verschleißteil lösbar mit dem Kraftfahrzeug verbunden sein muss, weshalb die Verbindungselemente bevorzugt für eine Verschraubung als Schraubhülse oder Schraubbuchse ausgebildet sind.

In der Figur 10 ist eine Anbringung des Hohlprofils 16 mittels der Hohlprofilverbindung 27 an einem weiteren Bauteil 17 in Form eines Fahrzeugschwellers 34 dargestellt. Dabei fixiert ein Befestigungsmittel in Form der Schraube 32 das mit dem Hohlprofil 16 verbundene Verbindungselement 1 mit einer Gewindebuchse 35 des Schwellers 34, die als Befestigungsmittel des weiteren Bauteils 17 dient.

Die durch die Schraubverbindung zwischen der Schraube 32 und der Gewindebuchse 35 aufgebrachte Haltekraft wird über einen Schraubenkopf 36 auf die Innenfläche des Aufnahmeraums 8 des Verbindungselementes 1 übertragen und dann über die gleichgerichteten Anlageflächen 2, 3 in das Hohlprofil 16 eingeleitet, welches auf diese Weise an dem Schweller 34 als weiteres Bauteil 17 festgelegt wird.

Das hier dargestellte Grundprinzip der Hohlprofilverbindung kann auch als eine bajonettverschlussartige Verbindung angesehen werden, da die Verbindung zwischen dem Verbindungselement 1 und dem Hohlprofil 16 durch ein etwa gradliniges Einführen des Verbindungselementes 1 in das Hohlprofil 16, gefolgt von einem Verdrehen des Verbindungselementes 1 in einer Ebene 20, 21 erfolgt, die senkrecht zur Einführrichtung 33 steht.

### Bezugszeichenliste

- 1: Verbindungselement
- 2: Anlagefläche
- 3: Anlagefläche
- 4: Mantelabschnitt
- 5: Formschlussmittel
- 6: Rastmittel
- 7: Schraubloch
- 8: Aufnahmeraum
- 9: Kopfabschnitt
- 10: Bund
- 11: Einführschräge
- 12: Mittel
- 13: Dichtmittel
- 14: Mantelabschnitt
- 15: Schweißstelle
- 16: Hohlprofil
- 17: Weiteres Bauteil
- 18: Abschnitt (unten)
- 19: Abschnitt (oben)
- 20: Ebene
- 21: Ebene
- 22: Rasthaken
- 23: Verbindungsausschnitt
- 24: Ausnehmung (unten)
- 25: Ausnehmung (oben)
- 26: Radiale Aufweitung
- 27: Hohlprofilverbindung
- 28: Rastnase
- 29: Dichtspur
- 30: Schlüsselfläche
- 31: Verstärkungselement
- 32: Schraube
- 33: Einführrichtung
- 34: Fahrzeugschweller
- 35: Gewindebuchse
- 36: Schraubenkopf

- D₄: Durchmesser
- D₉: Durchmesser
- D₁₀: Durchmesser
- D24: Durchmesser
- D25: Durchmesser

## Patentansprüche

1. Verbindungselement (1) zum Herstellen einer Verbindung zwischen einem Hohlprofil (16) und einem weiteren Bauteil (17), wobei das Verbindungselement (1) einerseits für einen wenigstens formschlüssigen Eingriff mit dem Hohlprofil (16) und für ein Verbinden mit dem weiteren Bauteil (17) ausgebildet ist, **dadurch gekennzeichnet, dass** wenigstens zwei in der Höhe versetzt zueinander angeordnete Anlageflächen (2, 3) für einen Kontakt mit wenigstens zwei damit korrespondierenden Abschnitten (18, 19) des Hohlprofiles (16) vorgesehen sind und die Anlageflächen (2, 3) etwa gleichsinnig an dem Verbindungselement (1) so angeordnet sind, dass es mit den beiden Anlageflächen (2, 3) an unterschiedlichen Abschnitten des Hohlprofils (16) zu liegen kommt und somit eine auf das Verbindungselement (1) wirkende Haltekraft über die Anlageflächen (2, 3) in das Hohlprofil einleitbar ist, wobei das Verbindungselement (1) einen rotationssymmetrischen Grundkörper aufweist und wenigstens ein das Hohlprofil (16) in Verbindungsstellung umgreifendes Formschlussmittel (5) zum Fixieren des Verbindungselementes (1) an einem Abschnitt (18, 19) des Hohlprofils (16) nach dem Bajonettprinzip vorgesehen ist.

2. Verbindungselement (1) nach Anspruch 1, **dadurch gekennzeichnet, dass** Anlageflächen (2, 3) in etwa parallel zueinander ausgebildeten Ebenen (20, 21) verlaufen.

3. Verbindungselement (1) nach einem der vorhergehenden Ansprüche, **dadurch gekennzeichnet, dass** wenigstens ein das Hohlprofil (16) in Verbindungsstellung umgreifende Formschlussmittel (5), insbesondere ein Rasthaken (22), zum Fixieren des Verbindungselementes (1) an einem Abschnitt (18, 19) des Hohlprofils (16) vorgesehen ist.

4. Verbindungselement (1) nach Anspruch 2 oder 3, **dadurch gekennzeichnet, dass** jeder Anlagefläche (2, 3) wenigstens ein Formschlussmittel (5) für eine formschlüssige Verbindung mit dem entsprechenden Abschnitt (18, 19) des Hohlprofils (16) zugeordnet ist.

5. Verbindungselement (1) nach einem der Ansprüche 2 bis 4, **dadurch gekennzeichnet, dass** das wenigstens eine Formschlussmittel (5) an einer der jeweiligen Anlagefläche (2, 3) abgewandten Seite Einführhilfen, insbesondere Einführschrägen (11), aufweist.

6. Verbindungselement (1) nach einem der vorhergehenden Ansprüche 2 bis 5, **dadurch gekennzeichnet, dass** an wenigstens einer Anlagefläche (2, 3) wenigstens ein Rastmittel (6) zum Sichern der Verbindung mit dem Hohlprofil (16) vorgesehen ist, insbesondere wenigstens eine Rastnase (28).

7. Verbindungselement (1) nach einem der vorhergehenden Ansprüche, **dadurch gekennzeichnet, dass** auf wenigstens einer Anlagefläche (2, 3) Dichtmittel (13) für eine dichtende Anlage an dem Abschnitt (18, 19) des Hohlprofils (16) vorgesehen ist, wobei die Dichtmittel (13) vorzugsweise auf einer umlaufenden Dichtspur (29) angeordnet sind.

8. Verbindungselement (1) nach einem der vorhergehenden Ansprüche, **dadurch gekennzeichnet, dass** Mittel (12) zum Ansetzen eines Werkzeuges, insbesondere eine Schlüsselfläche (30), an dem Verbindungselement (1) vorgesehen ist.

9. Verbindungselement (1) nach Anspruch 8, **dadurch gekennzeichnet, dass** das Mittel (12) zum Ansetzen eines Werkzeugs an einem die Anlageflächen (2, 3) verbindenden Abschnitt, insbesondere an einem Mantelabschnitt (4), vorgesehen ist.

10. Hohlprofil (16) mit wenigstens einem Verbindungsausschnitt (23), der wenigstens zwei einander gegenüberliegende Wandabschnitte (18, 19) des Hohlprofils (16) mit jeweils wenigstens einer Ausnehmung (24, 25) zum Aufnehmen eines Verbindungselementes (1) durchsetzt, wobei die Ausnehmungen (24, 25) unterschiedlich groß sind, insbesondere unterschiedliche Durchmesser (D₂₄, D₂₅) aufweisen, **dadurch gekennzeichnet, dass** zum Herstellen einer Verbindung zwischen dem Hohlprofil (16) und einem Verbindungselement (12) wenigstens eine Ausnehmung (24, 25) des Hohlprofils (16) wenigstens eine radiale Aufweitung (26) zum Hindurchführen wenigstens eines Formschlussmittels (5) des Verbindungselements (1) aufweist.

11. Hohlprofilverbindung (27) mit einem Hohlprofil (16) gemäß Anspruch 10 und wenigstens einem Verbindungselement (1) nach einem der Ansprüche 1-9.

12. Hohlprofilverbindung (27) nach Anspruch 11, **dadurch gekennzeichnet, dass** das Verbindungselement (1) im montierten Zustand mit dessen Anlageflächen (2, 3) an dazu korrespondierenden Abschnitten (18, 19) des Hohlprofils (16) anliegt, wobei Formschlussmittel (5) des Verbindungselementes (1) wenigstens einen der Abschnitte (18, 19) umgreifen, so dass ein Teil des Abschnittes (18, 19) zwischen dem Formschlussmittel (5) und der Anlagefläche (2, 3) zu liegen kommt.

13. Hohlprofilverbindung nach Anspruch 12, **dadurch gekennzeichnet, dass** das Verbindungselement (1) im montierten Zustand gegen ein Verdrehen in der Ebene (20, 21) in einer der Anlageflächen (2,3) gesichert ist, vorzugsweise form- und/oder reibschlüssig, insbesondere form- und/oder reibschlüssig und stoffschlüssig.

## Claims

1. Connecting element (1) for establishing a connection between a hollow profile (16) and a further component (17), wherein the connecting element (1) is configured for an at least form-fitting engagement with the hollow profile (16), on the one hand, and for connecting to the further component (17), **characterized in that** at least two contact faces (2, 3) which are disposed mutually offset in terms of height are provided for contacting at least two portions (18, 19) of the hollow profile (16) that communicate with said contact faces (2, 3), and the contact faces (2, 3) in approximately the same direction are disposed on the connecting element (1) such that the latter, by way of the two contact faces (2, 3), comes to bear on different portions of the hollow profile (16) and thus a holding force that acts on the connecting element is able to be introduced into the hollow profile by way of the contact faces (2, 3), wherein the connecting element (1) has a rotationally symmetrical main body, and at least one form-fitting means (5) that, for fixing the connecting element (1) according to the principle of a bayonet mount, in the connecting position encompasses the hollow profile (16) is provided on a portion (18, 19) of the hollow profile (16).

2. Connecting element (1) according to Claim 1, **characterized in that** contact faces (2, 3) run in planes (20, 21) that are configured so as to be approximately mutually parallel.

3. Connecting element (1) according to one of the preceding claims, **characterized in that** at least one form-fitting means (5), in particular a latching hook (22) that, for fixing the connecting element (1) in the connecting position, encompasses the hollow profile (16) is provided on a portion (18, 19) of the hollow profile (16).

4. Connecting element (1) according to Claim 2 or 3, **characterized in that** each contact face (2, 3), for connecting in a form-fitting manner to the corresponding portion (18, 19) of the hollow profile (16), is assigned at least one form-fitting means (5).

5. Connecting means (1) according to one of Claims 2 to 4, **characterized in that** the at least one form-fitting means (5), on a side that faces away from the respective contact face (2, 3), has introduction aids, in particular introduction ramps (11).

6. Connecting element (1) according to one of preceding Claims 2 to 5, **characterized in that** at least one latching means (6), in particular at least one latching cam (28), for securing the connection to the hollow profile (16) is provided on at least one contact face (2, 3).

7. Connecting element (1) according to one of the preceding claims, **characterized in that** sealing means (13) for bearing in a sealing manner on the portion (18, 19) of the hollow profile (16) are provided on at least one contact face (2, 3), wherein the sealing means (13) are preferably disposed on an encircling sealing track (29).

8. Connecting element (1) according to one of the preceding claims, **characterized in that** means (12) for engaging a tool, in particular a spanner flat (30), are provided on the connecting element (1).

9. Connecting element (1) according to Claim 8, **characterized in that** the means (12) for engaging a tool is provided on a portion, in particular a shell portion (4), that connects the contact faces (2, 3).

10. Hollow profile (16) having at least one connecting cutout (23) which penetrates at least two mutually opposite wall portions (18, 19) of the hollow profile (16) that each have at least one clearance (24, 25) for receiving a connecting element (1), wherein the clearances (24, 25) are of different sizes, in particular have different diameters (D₂₄, D₂₅), **characterized in that** at least one clearance (24, 25) of the hollow profile (16), for establishing a connection between the hollow profile (16) and a connecting element (12), has at least one radial widening (26) for guiding through at least one form-fitting means (5) of the connecting element (1).

11. Hollow profile connection (27) having a hollow profile (16) according to Claim 10 and at least one connecting element (1) according to one of Claims 1 to 9.

12. Hollow profile connection (27) according to Claim 11, **characterized in that** the connecting element (1) in the assembled state, by way of the contact faces (2, 3) thereof bears on respective communicating portions (18, 19) of the hollow profile (16), wherein form-fitting means (5) of the connecting element (1) encompass at least one of the portions (18, 19) such that part of the portion (18, 19) comes to lie between the form-fitting means (5) and the contact face (2, 3).

13. Hollow profile connection according to Claim 12, **characterized in that** the connecting element (1) in the assembled state in one of the contact faces (2, 3) is secured, preferably in a form-fitting and/or friction-fitting manner, in particular a form-fitting and/or friction-fitting and materially integral manner, against rotating in the plane (20, 21).

## Revendications

1. Élément d'assemblage (1) permettant la réalisation d'un assemblage entre un profilé creux (16) et un autre composant (17), l'élément d'assemblage (1) étant réalisé d'une part pour une entrée en prise au moins par complémentarité de formes avec le profilé creux (16) et pour un assemblage avec l'autre composant (17), **caractérisé en ce qu'**au moins deux surfaces d'appui (2, 3) disposées de manière décalée en hauteur l'une par rapport à l'autre sont prévues pour un contact avec au moins deux sections (18, 19), correspondant à celles-ci, du profilé creux (16) et les surfaces d'appui (2, 3) sont disposées approximativement dans le même sens sur l'élément d'assemblage (1), de telle sorte qu'il vient se placer par les deux surfaces d'appui (2, 3) sur différentes sections du profilé creux (16) et par conséquent une force de retenue agissant sur l'élément d'assemblage (1) peut être introduite dans le profilé creux par le biais des surfaces d'appui (2, 3), l'élément d'assemblage (1) comprenant un corps de base à symétrie de révolution et au moins un moyen d'engagement par complémentarité de formes (5) venant en prise autour du profilé creux (16) dans la position d'assemblage étant prévu pour la fixation de l'élément d'assemblage (1) à une section (18, 19) du profilé creux (16) selon le principe de la baïonnette.

2. Élément d'assemblage (1) selon la revendication 1, **caractérisé en ce que** les surfaces d'appui (2, 3) s'étendent dans des plans (20, 21) réalisés approximativement parallèlement l'un à l'autre.

3. Élément d'assemblage (1) selon l'une des revendications précédentes, **caractérisé en ce qu'**au moins un moyen d'engagement par complémentarité de formes (5) venant en prise autour du profilé creux (16) dans la position d'assemblage, en particulier un crochet d'encliquetage (22), est prévu pour la fixation de l'élément d'assemblage (1) sur une section (18, 19) du profilé creux (16).

4. Élément d'assemblage (1) selon la revendication 2 ou 3, **caractérisé en ce qu'**au moins un moyen d'engagement par complémentarité de formes (5) pour un assemblage par complémentarité de formes avec la section correspondante (18, 19) du profilé creux (16) est associé à chaque surface d'appui (2, 3).

5. Élément d'assemblage (1) selon l'une des revendications 2 à 4, **caractérisé en ce que** l'au moins un moyen d'engagement par complémentarité de formes (5) comprend des auxiliaires d'insertion, en particulier des biseaux d'insertion (11), sur un côté opposé à la surface d'appui (2, 3) respective.

6. Élément d'assemblage (1) selon l'une des revendications précédentes 2 à 5, **caractérisé en ce qu'**au moins un moyen d'encliquetage (6) servant à assujettir l'assemblage avec le profilé creux (16), en particulier au moins un ergot d'encliquetage (28), est prévu sur au moins une surface d'appui (2, 3).

7. Élément d'assemblage (1) selon l'une des revendications précédentes, **caractérisé en ce que** des moyens d'étanchéité (13) pour un appui étanche contre la section (18, 19) du profilé creux (16) sont prévus sur au moins une surface d'appui (2, 3), les moyens d'étanchéité (13) étant disposés de préférence sur une voie d'étanchéité (29) périphérique.

8. Élément d'assemblage (1) selon l'une des revendications précédentes, **caractérisé en ce qu'**un moyen (12) permettant de placer un outil, en particulier une surface pour clé (30), est prévu sur l'élément d'assemblage (1).

9. Élément d'assemblage (1) selon la revendication 8, **caractérisé en ce que** le moyen (12) permettant de placer un outil est prévu sur une section raccordant les surfaces d'appui (2, 3), en particulier sur une section d'enveloppe (4).

10. Profilé creux (16) comportant au moins une découpe d'assemblage (23), qui traverse au moins deux sections de paroi (18, 19), en regard l'une de l'autre, du profilé creux (16) comportant respectivement au moins un évidement (24, 25) servant à recevoir un élément d'assemblage (1), les évidements (24, 25) étant de tailles différentes, en particulier présentant des diamètres différents (D₂₄, D₂₅), **caractérisé en ce que**, pour la réalisation d'un assemblage entre le profilé creux (16) et un élément d'assemblage (12), au moins un évidement (24, 25) du profilé creux (16) comprend au moins un élargissement radial (26) pour le guidage à travers celui-ci d'au moins un moyen d'engagement par complémentarité de formes (5) de l'élément d'assemblage (1).

11. Assemblage de profilé creux (27) comportant un profilé creux (16) selon la revendication 10 et au moins un élément d'assemblage (1) selon l'une des revendications 1 à 9.

12. Assemblage de profilé creux (27) selon la revendication 11, **caractérisé en ce que**, dans l'état monté, l'élément d'assemblage (1) s'appuie par ses surfaces d'appui (2, 3) contre des sections (18, 19), correspondant à celles-ci, du profilé creux (16), des moyens d'engagement par complémentarité de formes (5) de l'élément d'assemblage (1) venant en prise autour d'au moins l'une des sections (18, 19), de sorte qu'une partie de la section (18, 19) vienne se placer entre le moyen d'engagement par complémentarité de formes (5) et la surface d'appui (2, 3).

13. Assemblage de profilé creux selon la revendication 12, **caractérisé en ce que**, dans l'état monté, l'élément d'assemblage (1) est assujetti de manière à empêcher une rotation dans le plan (20, 21) dans l'une des surfaces d'appui (2, 3), de préférence par engagement par complémentarité de formes et/ou par friction, en particulier par engagement par complémentarité de formes et/ou par friction et par liaison de matière.
